# EUROPÄISCHE PATENTANMELDUNG

(11) **EP 2 790 296 A1**
(43) Veröffentlichungstag der Anmeldung: **15.10.2014**
(21) Anmeldenummer: 13163492.5
(22) Anmeldetag: 12.04.2013
(51) Int. Cl.: H02K 1/24, H02K 15/02, H02K 15/12

(54) **Reluktanzmotor mit stabilisiertem Rotor**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE); Wolf, Nico, 98596 Trusetal (DE)

(57) **Zusammenfassung**

Die Erfindung betrifft einen Rotor (10) für einen Reluktanzmotor, wobei der Rotor (10) ein Blechpaket (14) aus mehreren elektrisch voneinander isolierten Schichten (16) aufweist, von denen jede zumindest ein magnetisch leitfähiges Rotorblech (18) aufweist und in der durch das zumindest eine Rotorblech (18) insgesamt mehrere Flussleitabschnitte (24) gebildet sind, die voneinander durch einen unmagnetischen Bereich (22) getrennt sind. Der Erfindung liegt die Aufgabe zugrunde, ein hohes Drehmoment und eine hohe Drehzahl zu ermöglichen. In zumindest einem Schacht (22) des Blechpakets (14) ist hierzu jeweils ein unmagnetisches Stützelement (34) angeordnet, welches dazu ausgebildet ist, den jeweiligen radial innenliegenden und an den jeweiligen Schacht (22) angrenzenden Flussleitabschnitt (24) gegen ein Verschieben in radialer Richtung (36) nach außen zu stützen.

## Beschreibung

Die Erfindung betrifft einen Rotor für einen Reluktanzmotor, einen Reluktanzmotor mit einem solchen Rotor, ein Kraftfahrzeug sowie ein Verfahren zum Herstellen des genannten Rotors. Der Rotor weist mehrere elektrisch voneinander isolierte Einzelbleche oder Rotorbleche auf, die zu einem Blechpaket aufeinander gestapelt sind.

Ein Rotor für einen Reluktanzmotor ist aus der US 5,818,140 A bekannt. Darin ist ein Rotor beschrieben, dessen Blechpaket aus Rotorblechen besteht, die Ausstanzungen aufweisen. Dieser Rotor ist hier auch als Vagati-Rotor bezeichnet. Durch die Ausstanzungen ergeben sich geschwungene, streifenförmige Blechabschnitte, die als Flussleitabschnitte dienen und den magnetischen Fluss in der für die Bereitstellung der Reluktanz des Rotors nötigen Weise führen. Zwischen den einzelnen Flussleitabschnitten befindet sich durch die Ausstanzungen Luft, d.h. ein unmagnetischer Flusssperrbereich, der als magnetische Flusssperre wirkt. Durch die streifenförmigen Flussleitabschnitte ergibt sich eine hohe Drehmomentausbeute. Die Reaktanz des Blechpakets ist in Richtung der q-Achse, d. h. der magnetischen Sperrrichtung aufgrund der unmagnetischen Flusssperrbereiche verhältnismäßig klein. Die streifenförmigen Flussleitabschnitte verlaufen quer zu der q-Achse und verbinden in Umfangsrichtung benachbarte Pole des Rotors, also die d-Achsen. Die Ausstanzungen zum Bereitstellen der unmagnetischen Flusssperrbereiche bzw. zum Ausbilden der Flussleitabschnitte führen aber zu einer Schwächung der mechanischen Stabilität des Blechpakets, so dass der beschriebene Rotor nicht für große Drehzahlen, insbesondere nicht für Drehzahlen größer als 3000 Umdrehungen/Minute geeignet ist. Aus diesem Grund sind Reluktanzrotoren der beschriebenen Art nicht für die Drehzahlanforderung im Flusssperrbereich von Kraftfahrzeugen mit elektrischen Antrieben geeignet.

Aus der JP 2002 095227 A ist ein Vagati-Rotor bekannt, bei dem die Flusssperrbereiche mit Kunstharz ausgegossen sind. Die angrenzenden Flussleitabschnitte weisen hierbei trapezförmige Aussparungen auf, in die beim Vergießen das Kunstharz ebenfalls fließt. Hierdurch sind die Flussleitabschnitte dann über eine Schwalbenschwanzverbindung mit dem ausgehärteten Kunstharz verbunden. Bei hohen Drehzahlen wird so eine durch Fliehkräfte bewirkte Zugkraft von den äußeren Flussleitabschnitten über das Kunstharz nach innen zur Welle hin abgeleitet. Nachteilig hierbei ist, dass Kunstharze bei Zugbelastung reißen können. Aussparungen in den Flussleitabschnitten wirken sich negativ auf die Effizienz des Motors aus, da der magnetische Fluss behindert wird.

Der Erfindung liegt die Aufgabe zugrunde, einen Rotor der eingangs bezeichneten Art anzugeben, der sowohl ein hohes Drehmoment als auch eine hohe Drehzahl ermöglicht, so dass er insbesondere als Bestandteil eines elektrischen Antriebs für ein Elektrofahrzeug geeignet ist.

Die Aufgabe wird durch einen Rotor gemäß Patentanspruch 1, einen Reluktanzmotor gemäß Patentanspruch 11, ein Kraftfahrzeug gemäß Patentanspruch 12 sowie ein Verfahren gemäß Patentanspruch 13 gelöst. Vorteilhafte Weiterbildungen der Erfindung sind durch die Unteransprüche gegeben.

Der erfindungsgemäße Rotor ist ein Reluktanzrotor, d. h. er ist für einen Reluktanzmotor vorgesehen. In bekannter Weise weist der erfindungsgemäße Rotor also ein Blechpaket auf, also einen Stapel aus mehreren elektrisch voneinander isolierten, weichmagnetischen Rotorblechen, die sich jeweils radial von einer Rotationsachse des Rotors weg erstrecken. Mit anderen Worten sind die Rotorbleche entlang der Rotationsachse aufgefädelt oder aufgeschichtet. Der erfindungsgemäße Rotor orientiert sich an den eingangs beschriebenen Reluktanzrotor von Vagati (US 5,818,140 A). Jede Schicht des Blechpakets weist also ein magnetisch leitfähiges Rotorblech auf, wobei durch beispielsweise Ausstanzungen mehrere Flussleitabschnitte für einen magnetischen Fluss gebildet sind. Die Flussleitabschnitte sind insbesondere in der bekannten Art streifenförmig und/oder verbinden zwei in Umfangsrichtung benachbarte d-Achsen des Rotors. Die Flussleitabschnitte sind jeweils voneinander durch einen unmagnetischen Bereich getrennt, also beispielsweise die ausgestanzten Aussparungen. Die unmagnetischen Bereiche wirken als magnetische Flusssperren und sind deshalb im Folgenden auch als Flusssperrbereiche bezeichnet. Sie erstrecken sich bevorzugt jeweils zwischen zwei in Umfangsrichtung benachbarten d-Achsen des Rotors. Unter magnetisch wird hier insbesondere ferromagnetisch, bevorzugt weichmagnetisch, verstanden. Entsprechend wird unter unmagnetisch oder amagnetisch hier nicht-ferromagnetisch, insbesondere nicht-weichmagnetisch verstanden. Die unmagnetischen Bereiche sind hierzu insbesondere jeweils mit Luft oder einem Polymer, insbesondere Kunstharz, gefüllt. Weiterhin können amagnetische Metalllegierungen eingesetzt werden, vorzugsweise hochfeste Al-Legierungen mit hoher Zugfestigkeit bei geringer Dichte.

Bei einer Rotation des Rotors wirken Fliehkräfte auf die einzelnen Flussleitabschnitte, die diese einzelnen Bleche des Rotorblechs von der Rotationsachse weg radial nach außen wirken. Durch die unmagnetischen Flusssperrbereiche, also beispielsweise die Ausstanzungen, ist die mechanische Belastbarkeit des Rotors aber geschwächt.

Um diese mechanische Schwächung durch das Vorsehen der unmagnetischen Flusssperrbereiche auszugleichen, ist bei dem erfindungsgemäßen Rotor vorgesehen, die einzelnen Flusssperrbereiche der unterschiedlichen Schichten derart beim Auffädeln der Rotorbleche in axialer Richtung hintereinander anzuordnen, dass einander entsprechende Flusssperrbereiche der einzelnen Schichten insgesamt in dem Blechpaket jeweils einen Raum oder Schacht bilden. Mit anderen Worten können die Aussparungen der Einzelbleche in axialer Richtung fluchtend hintereinander angeordnet werden, d.h. die einzelnen Rotorbleche sind nicht oder nur geringfügig gegeneinander verdreht entlang der Rotationsachse angeordnet. In dem zumindest einen Schacht ist dann jeweils ein unmagnetisches Stützelement angeordnet, also z.B. ein Stab. Jedes Stützelement ist dazu ausgebildet, den jeweiligen radial innen liegenden, angrenzenden Flussleitabschnitt gegen ein Verschieben in radialer Richtung nach außen zu stützen. In jedem Schacht kann also beispielsweise ein Stab stecken, welcher die Einzelbleche beim Rotieren des Rotors nach innen zur Rotationsachse hin drückt.

Anders als bei der eingangs beschriebenen Lösung, bei welcher ein Vagati-Rotor über Schwalbenschwanzverbindungen zusammengehalten ist, ergibt sich bei dem erfindungsgemäßen Rotor der Vorteil, dass die Stützelemente bei einer Rotation des Rotors nicht durch Zugkräfte belastet werden, sondern die Stützelemente einen Druck auf die innen liegenden Flussleitabschnitte ausüben müssen. Das Material der Stützelemente wird also gestaucht und nicht gedehnt, was den Rotor stabiler macht.

Um die radial nach außen auf die Stützelemente wirkende Kraft von den Stützelementen ableiten zu können, sieht eine vorteilhafte Weiterbildung des Rotors vor, an einer oder beiden Stirnseiten der zylindrischen Grundform des Rotors eine Scheibe anzuordnen, mit welcher jedes Stützelement verbunden ist. Eine solche Scheibe kann in Abhängigkeit von den auf die Stützelemente wirkenden Kräften und damit also in Abhängigkeit beispielsweise von der gewünschten maximalen Drehzahl des Rotors in ihrer Dicke und Materialbeschaffenheit wesentlich einfacher angepasst werden als die aus dem Stand der Technik bekannte Schwalbenschwanzverbindung.

Um noch größere Kräfte von den Stützelementen ableiten zu können, sieht eine Weiterbildung des erfindungsgemäßen Rotors vor, dass zwischen zumindest zwei der Schichten eine aus einem unmagnetischen Material gefertigte Scheibe angeordnet ist, mit welcher jedes Stützelement verbunden ist. Dadurch ergeben sich kürzere Hebelwege.

Die genannten Scheiben an den Stirnseiten des Rotors und/oder zwischen den magnetischen Schichten werden gemäß einer bevorzugten Ausführungsform als ein mit einem Polymer und/oder einer amagnetischen Metalllegierung ausgegossener zylindrischer Teilbereich des Rotors bereitgestellt. In derselben Weise kann vorgesehen sein, dass jedes Stützelement selbst ein Polymer und/oder eine amagnetische Metalllegierung umfasst, womit zumindest ein Schacht in dem Blechpaket ausgegossen ist. Mit anderen Worten können sowohl die Stützelemente als auch die Scheiben, welche die Stützelemente an der Welle des Rotors halten, durch Vergießen des Blechpakets hergestellt werden.

Das erfindungsgemäße Verfahren dient zum Herstellen einer solchen Ausführungsform des erfindungsgemäßen Rotors. Zum Bilden jeder magnetischen Schicht des Blechpakets wird jeweils ein magnetisch leitfähiges Blech bereitgestellt. Jedes Blech weist dabei die beschriebenen, streifenförmigen Flussleitabschnitte einer einzelnen magnetischen Schicht auf. Hierzu kann das Blech beispielsweise gestanzt sein, so dass sich die unmagnetischen Bereiche als Aussparungen ergeben. Um nun das Blechpaket herzustellen, werden die Bleche zu dem Blechpaket aufgefädelt, also in Bezug auf die vorgesehene Rotationsachse in axialer hintereinander angeordnet. Nach dem Auffädeln wird das Blechpaket mit einer Vergussmasse vergossen, die das Polymer, also z.B. einem Kunstharz, und/oder die amagnetische Metalllegierung umfasst. Zwischen zumindest zwei der Bleche und/oder nur an einer oder auch an beiden Stirnseiten des Blechpakets wird beim Vergießen eine Scheibe aus der Vergussmasse geformt, wobei jede Scheibe mit in den Aussparungen angeordneter Vergussmasse, also den späteren Stützelementen, verbunden wird.

Um die Scheibe an den Stirnseiten auszubilden, kann das Blechpaket in eine entsprechende Gussform gelegt werden, in der dann z.B. mittels eines Spritzguss- oder Druckgussverfahrens die Vergussmasse eingebracht wird.

Um eine Scheibe zwischen zumindest zwei der Schichten auszubilden, wird bevorzugt beim Auffädeln der Bleche jeweils zwischen die beiden Bleche ein Distanzstück angeordnet und hierdurch zwischen den Schichten ein Spalt zum Befüllen mit der Vergussmasse vorbereitet.

Nach dem Aushärten stellt die Vergussmasse insgesamt einen Stützkörper aus den Stützelementen und den Scheiben dar. In diesem Stützkörper sind die magnetisch leitfähigen Flussleitabschnitte eingebettet. Ein besonders belastbarer, und damit für hohe Drehzahlen des Rotors tauglicher Stützköper ergibt sich, wenn die Vergussmasse Fasern umfasst, also z.B. Glasfasern oder Kohlefasern.

Bis hierhin wurde der Rotor in der Weise beschrieben, dass das Blechpaket des Rotors jeweils aus aufeinander geschichteten einzelnen Rotorblechen gebildet ist, die jeweils eine Schicht des Blechpakets bilden. Es gibt aber eine Ausführungsform der Erfindung, bei der jede Schicht nicht aus einem einzigen Rotorblech mit Aussparungen gebildet ist, sondern zumindest eine der Schichten mehrere, voneinander getrennte streifenförmige Rotorbleche aufweist, von denen jedes einen der Flussleitabschnitte der Schicht bildet. Diese einzelnen Flussleitabschnitte sind also nicht untereinander durch weichmagnetische Bereiche verbunden. Ansonsten ist aber auch diese Ausführungsform des erfindungsgemäßen Rotors in der soeben beschriebenen Weise mit zumindest einer Einlegscheibe zwischen zwei der Schichten aufgebaut. Ohne die weichmagnetischen Verbindungen zwischen den Flussleitabschnitten ergibt sich eine besonders große Reluktanz und damit ein besserer Wirkungsgrad des Rotors.

Um ein solches Blechpaket herzustellen, bei dem jede Schicht aus mehreren einzelnen, voneinander getrennten Flussleitabschnitten gebildet ist, sieht eine Ausführungsform des Verfahrens vor, nach dem Stapeln der Bleche einen Außenring, welches die einzelnen Flussleitabschnitte zusammenhält, so dass sich ein einzelnes Blechstück ergibt, durch ein spanendes Verfahren zu entfernen und hierdurch jedes der Bleche, also jede Schicht des Blechpakets, in mehrere voneinander getrennte Rotorbleche aufzutrennen.

Eine weitere Verbesserung der Stabilität ergibt sich, wenn ein Stützelement jeweils im Querschnitt die Form der Flusssperrbereiche aufweist. Bei einem Reluktanzmotor sind ideale Flusssperrbereiche U-förmig, wobei durch die geschwungene U-Form jeweils zwei benachbarte magnetische Pole des Reluktanzrotors verbunden sind und hierbei der Flusssperrbereich in seiner Längserstreckung quer zu einer q-Achse des Rotors verläuft. Indem auch ein Stützelement in der Ebene der einzelnen Schichten des Blechpakets ein U-förmiges Profil aufweist, ergibt sich der Vorteil, dass ein solches Stützelement besonders große Fliehkräfte aufnehmen kann. Wird das Stützelemente durch Ausgießen der Flusssperrbereiche erzeugt, so ergibt sich natürlich von selbst das U-förmige Profil.

Wie bereits ausgeführt gehört zu der Erfindung auch ein Reluktanzmotor. Der erfindungsgemäße Reluktanzmotor zeichnet sich durch einen Rotor aus, der eine Ausführungsform des erfindungsgemäßen Rotors ist. Bei dem erfindungsgemäßen Reluktanzmotor ist der Rotor dazu ausgelegt, durch das abwechselnde Bestromen den Rotor mit einer Drehzahl zu rotieren, welche größer als 5.000 Umdrehungen/Minute ist. Dies ist mit herkömmlichen Reluktanzmotoren, die nach dem Prinzip von Vagati gebildet sind, nicht möglich. Erst durch die erfindungsgemäße Stabilisierung des Blechpakets mittels der Stützelemente können diese Drehzahlen überschritten werden.

Der erfindungsgemäße Reluktanzmotor kann mit einem Umrichter zum abwechselnden Bestromen von Spulen eines Stators des Reluktanzmotors verbunden sein, wobei der Umrichter dazu ausgelegt ist, durch das abwechselnde Bestromen den Rotor mit einer Drehzahl zu rotieren, welche größer als 5000 U/min ist. Der erfindungsgemäße Reluktanzmotor kann einen Umrichter aufweisen, mit dem in an sich bekannter Weise Spulen eines Rotors des Reluktanzmotors abwechselnd bestromt werden können.

Insbesondere ist vorgesehen, dass der Umrichter dazu ausgelegt ist, den Reluktanzmotor bei einer Drehzahl von mehr als 9.000 Umdrehungen/Minute zu rotieren.

Entsprechend ist das erfindungsgemäße Kraftfahrzeug dadurch gekennzeichnet, dass es einen Reluktanzmotor gemäß einer Ausführungsform des erfindungsgemäßen Reluktanzmotors aufweist. Erst mit einem solchen Reluktanzmotor mit ausreichend hoher Drehzahl ist eine sinnvolle Nutzung des Reluktanzmotors als Antriebsmotor für eine Fahrt des Kraftfahrzeugs möglich.

Die Erfindung ist im Folgenden anhand von Ausführungsbeispielen noch einmal näher erläutert. Hierzu zeigen:
- FIG 1: eine schematische Darstellung einer perspektivischen Ansicht einer Ausführungsform des erfindungsgemäßen Rotors,
- FIG 2: eine schematische Darstellung eines Längsschnitts durch den Rotor von FIG 1,
- FIG 3: eine schematische Darstellung einer perspektivischen Ansicht eines Stützkörpers, der durch eine Vergussmasse gebildet ist,
- FIG 4: eine schematische Darstellung einer Frontalansicht einer weiteren Ausführungsform des erfindungsgemäßen Rotors,
- FIG 5: eine schematische Darstellung einer Frontalansicht einer weiteren Ausführungsform des erfindungsgemäßen Rotors,
- FIG 6: eine schematische Darstellung eines Längsschnitts durch eine Ausführungsform der erfindungsgemäßen elektrischen Maschine und
- FIG 7: eine schematische Darstellung einer Ausführungsform des erfindungsgemäßen Kraftfahrzeugs.
Bei den im Folgenden erläuterten Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Die dargestellten Ausführungsbeispiele stellen die bevorzugte Ausführungsform der Erfindung dar.

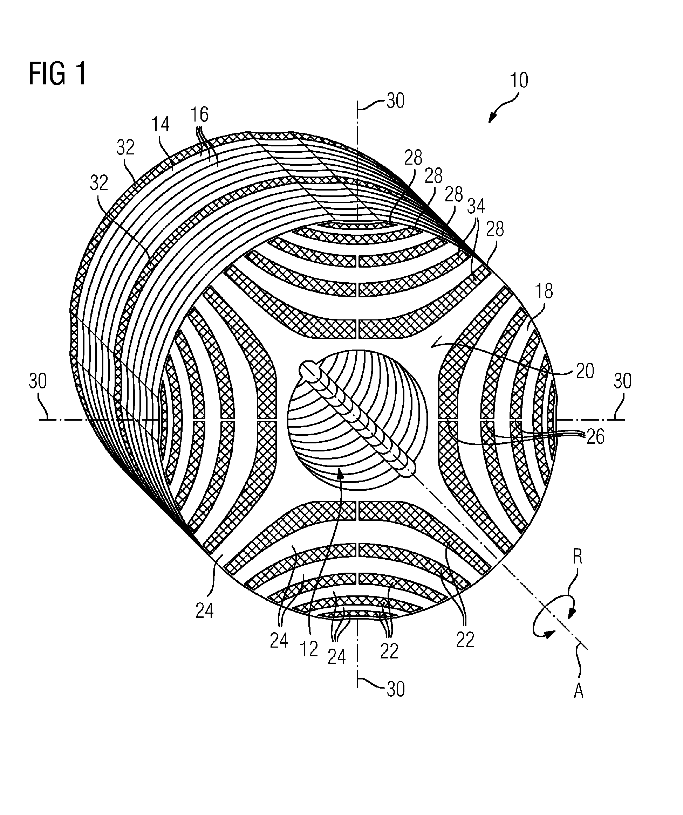

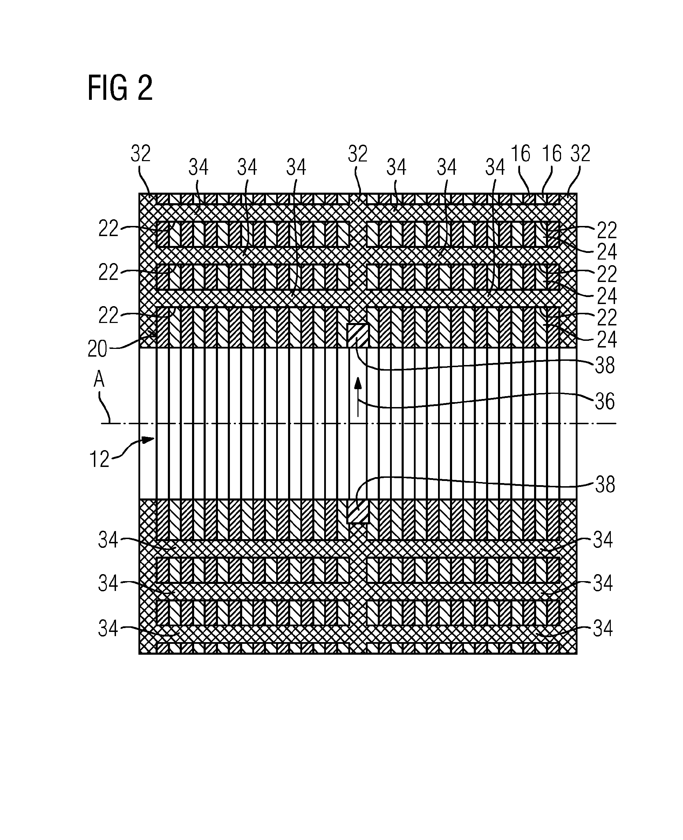

In FIG 1 und FIG 2 ist ein Reluktanzrotor oder kurz Rotor 10 gezeigt. Der Rotor 10 kann in einen Reluktanzmotor eingebaut sein. Beispielsweise kann der Reluktanzmotor ein Antriebsmotor für ein elektrisch angetriebenes Kraftfahrzeug sein. Im eingebauten Zustand ist durch eine Durchgangsöffnung 12 des Rotors 10 eine (nicht dargestellte) Welle des Reluktanzmotors gesteckt. Die Welle und damit der Rotor 10 ist dann um eine Rotationsachse A drehbar gelagert, so dass der Rotor 10 in einem (nicht dargestellten) Stator des Reluktanzmotors eine Rotation R um die Rotationsachse A vollführen kann. Ein Durchmesser des Rotors 10 in radialer Richtung kann mehr als 20 cm betragen. Eine Länge des Rotors 10 in axialer Richtung kann mehr als 30 cm betragen.

Der Rotor 10 weist als magnetisch aktiven Teil ein Blechpaket 14 auf, das aus mehreren Schichten 16 gebildet ist, die jeweils weichmagnetisches, insbesondere ferromagnetisches, Material aufweisen. Von den magnetischen Schichten 16 sind in der FIG 1 der Übersichtlichkeit halber nur einige mit einem Bezugszeichen versehen. Zwischen den Schichten befindet sich jeweils in an sich bekannter Weise eine elektrisch isolierende Schicht, um Wirbelströme in dem Blechpaket 14 zu blockieren. Jede Schicht 16 ist in dem in FIG 1 und FIG 2 gezeigten Beispiel jeweils durch ein Rotorblech 18 gebildet. In der FIG 1 ist nur das Rotorblech 18, welches sich an einer Stirnseite 20 in axialer Richtung entlang der Achse A an einem vorderen Ende befindet, mit einem Bezugszeichen versehen. Das Rotorblech 18 (und entsprechend auch die übrigen Rotorbleche der übrigen Schichten 16) weist Aussparungen 22 auf, die Sperren für eine magnetischen Fluss bilden. Die Rotorbleche sind in der Weise fluchtend in dem Blechpaket axial hintereinander angeordnet, dass die Aussparungen 22 und entsprechend auch die Flussleitabschnitte 24 axial fluchten. Die Aussparungen 22 aller hintereinander angeordneten Rotorbleche 18 bilden insgesamt Schächte oder Räume in dem Blechpaket 14, in denen sich unmagnetisches Material befindet. Die Rotorbleche der Schichten 16 können alle die gleiche Form aufweisen. Die Aussparungen 22 können beispielsweise durch Ausstanzen der entsprechenden Formen aus Rotorblech 18 gebildet sein. Die Aussparungen 22 bilden unmagnetische Bereiche in jeder Schicht 16 und fungieren als magnetische Flusssperren.

Von dem Rotorblech 18 sind somit nur Flussleitabschnitte 24 und Stege 26 zum mechanischen Verbinden der Flussleitabschnitte 24 sowie ein Außenring 28 zum mechanischen Verbinden der Flussleitabschnitte 24 vorhanden. Mittels der Flussleitabschnitte 24 wird in dem Reluktanzmotor ein magnetischer Fluss quer zu q-Achsen 30 des Rotors 10 entlang einer magnetischen Vorzugsrichtung ein magnetischer Fluss, der durch elektrische Spulen des Stators erzeugt wird, geleitet.

Durch die Aussparungen 22 ist die mechanische Stabilität jedes Rotorblechs 18 geringer als bei einem Rotorblech, welches als eine (bis auf die Durchgangsöffnung 12) massive Scheibe ausgebildet ist. Bei dem Rotor 10 ist es allerdings dennoch ermöglicht, dass er in dem Reluktanzmotor mit einer Drehzahl von mehr als 5.000 Umdrehungen/Minute, insbesondere bei 10.000 Umdrehungen/Minute und sogar 15.000 Umdrehungen/Minute betrieben wird. Hierzu ist der Rotor 10 mechanisch stabilisiert.

Die Verstärkung wird erzielt durch Ausfüllen der Flußsperren, d.h. der durch die Aussparungen 22 gebildeten Schächte in dem Blechpaket 14, mit einem unmagnetischen oder nicht-magnetischen Werkstoff, vorzugsweise einem Kunststoff oder Harz, die bevorzugt fasergefüllt sind, oder einer amagnetischen hochfesten Metalllegierung. Hierdurch sind in den Aussparungen 22 Stützelemente 34 aus dem nicht-magnetischen Werkstoff ausgebildet. Um die Stabilität auf der kompletten Rotorpaketlänge zu gewährleisten, werden die in den Aussparungen 22 befindlichen Stützelemente durch voll ausgegossene Teilbereiche in Form von zylindrischen Scheiben 32 auf die Paketlänge integriert, d.h. zwischen zumindest zwei der Schichten 16 befindet sich eine solche Scheibe 32. Die Stützelemente sind mit den Scheiben 32 verbunden.

Zusätzlich sind an den beiden Stirnseiten, d.h. der Stirnseite 20 und der axial gegenüberliegenden Seite des Blechpakets 14, ebenfalls voll ausgegossene zylinderförmige Scheiben 32 vorgesehen. In FIG 1 ist die vordere Scheibe 32, die sich an der Stirnseite 20 befindet, nicht dargestellt, um die Struktur des Rotorblechs 18 darstellen zu können. Mit "voll ausgegossen" ist hierbei gemeint, dass natürlich auch in den Scheiben 32 die Durchgangsöffnung 12 für die Welle vorgesehen ist.

Wie FIG 2 zeigt, ist die in den Aussparungen 22 als Stützelemente 34 fungierende Vergussmasse mit den Scheiben 32 verbunden. Eine entlang der radialen Richtung 36 (bezüglich der Rotationsachse A) auf die Stützelemente 34 wirkende Kraft wird auf die Scheiben 32 übertragen. Bei einer Rotation R des Rotors 10 werden die magnetischen Flussleitabschnitte 24 in radialer Richtung 36 nach außen von der Welle weg gedrückt. Sie drücken hierdurch gegen die Stützelemente 34. Die Stützelemente werden von den Scheiben 32 gehalten. In Abhängigkeit davon, wie groß die von den Flussleitabschnitten 24 ausgeübten Kräfte sind, können im Gegensatz zu den in FIG 1 und FIG 2 gezeigten Ausführungsbeispielen weitere voll ausgegossene Zylinder, d.h. weitere Scheiben 32, vorzugsweise in gleichmäßigen Abständen entlang der Rotationsachse A längs in das Blechpaket 14 in der gezeigten Weise integriert sein, um auf die gesamte Rotorpaketlänge eine Versteifung bezüglich der Fliehkraft zu erhalten. Auch die Dicke der Scheiben 32 kann in Abhängigkeit von der zu erwartenden Kräften gewählt sein.

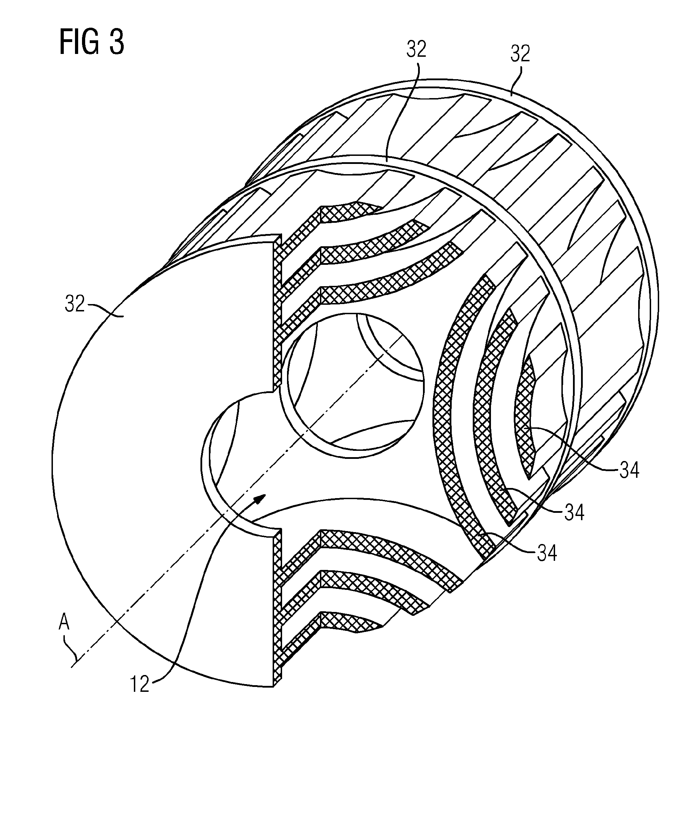

Die Vergussmasse kann beispielsweise mittels eines Spritzguss- oder Druckgussverfahrens nach dem Auffädeln, d.h. den Aneinanderreihen der Rotorbleche 18, in die Aussparungen 22 und in den Bereich der Scheiben 32 eingebracht worden sein. Um die Dicke der Scheiben 32 und deren Position festzulegen, wird das Rotorblechpaket 14 beim Auffädeln durch Distanzstücke 38, beispielsweise Ringe oder Klötze aus einem Polymer oder amagnetischen Metall, auf Abstand gehalten, so dass sich beim Vergießen die stabilisierenden zylindrischen Scheiben 32 aus Vergussmasse ergeben. In FIG 3 ist hierzu der sich ergebende Stützkörper aus Vergussmasse ohne die darin eingebetteten magnetischen Flussleitabschnitte 24 gezeigt.

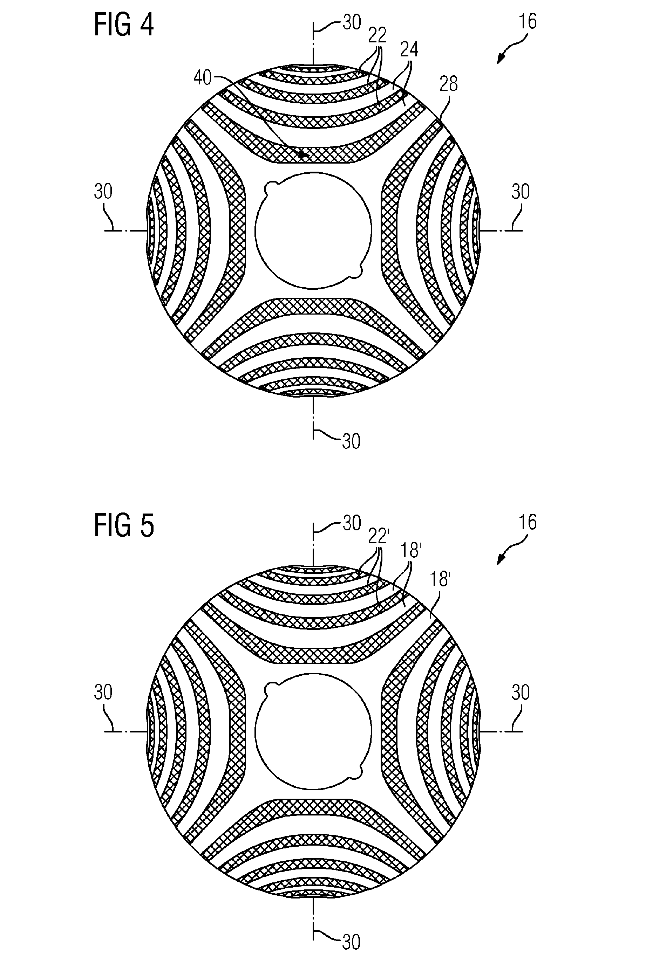

In FIG 4 und FIG 5 sind alternative Ausführungsformen von Rotoren gezeigt, bei welchen einzelne magnetische Schichten 16 anders ausgebildet sind. Diese Ausführungsformen weisen den Vorteil auf, dass die zum Ausbilden der Reluktanz nötige magnetische Flussführung in noch geringerem Maß als bei dem Rotor 10 durch Stützelemente, wie die Stege 26 und den Außenring 28 beeinflusst sind. Zur besseren Orientierung sind in FIG 4 und FIG 5 Elemente, welche Elementen in Bezug auf ihre Funktion entsprechen, die in FIG 1 oder FIG 2 gezeigt sind, mit den selben Bezugszeichen wie in FIG 1 bzw. FIG 2 versehen.

In FIG 4 ist eine magnetische Schicht 16 eine magnetische Schicht eines Rotors gezeigt, bei der mehrere Flussleitabschnitte 24 bereitgestellt sind, die ebenfalls durch die Aussparungen 22 voneinander getrennt sind, die aber ausschließlich durch einen äußeren Steg oder Ring 28 zusammengehalten sind. An den Stellen 40, an welchen bei den Rotorblechen 18 des Rotors 10 die Stege 26 vorhanden sind, ist bei der magnetischen Schicht 16 in FIG 4 ebenfalls ein unmagnetischer Bereich, wie er durch die Aussparungen 22 gebildet ist.

In FIG 5 ist eine magnetische Schicht eines Rotors gezeigt, bei welcher einzelne Flussleitabschnitte aus voneinander getrennten Rotorblechen 18' gebildet sind, zwischen denen sich jeweils unmagnetische Bereiche 22', also insbesondere Kunstharz befinden.

Ein Rotor mit magnetischen Schichten 16, wie sie in FIG 5 gezeigt ist, kann beispielsweise aus einem Rotor mit einer magnetischen Schicht gebildet werden, wie sie in FIG 4 gezeigt ist. Indem ein Rotor aus FIG 4 durch ein spanendes Verfahren des Außenrings 28 abgetragen wird, erhält man einen Rotor mit einer magnetischen Schicht 16, wie sie in FIG 4 dargestellt ist.

In FIG 4 und FIG 5 ist auch gezeigt, wie bei Weglassen der Stege an den Stellen 40 die Flusssperrenkontur in der Ebene der einzelnen Schichten 16, d.h. ein Profil der Flusssperren in der Ebene senkrecht zur Rotationsachse A, U-förmig ausgestaltet sind. Die Flusssperrbereiche laufen damit quer zu den q-Achsen 30. Entsprechend ergibt sich auch für die Stützelemente 34 ein U-förmiges Profil in der Ebene der Schichten 16. Die Stützelemente 34 weisen hierdurch ein besonders großes Biegemoment auf, so dass sie besonders fliehkraftstabil an die Scheiben 32 angebunden sind. Indem die zylindrischen Scheiben 32 sowie die U-förmigen Konturen der Stützelemente in einem Prozess gegossen werden, ist der sich ergebende Stützkörper ebenfalls besonders stabil.

Durch die Beispiele ist gezeigt, wie man bei einem Reluktanzmotor die folgenden Vorteile erlangen kann. Es erhöht sich die Drehzahltauglichkeit des Rotors 10. Die Stegbreite der verbindenden Stege an dem Außendurchmesser entlang der Rotoraußenseite, also der Außenring 28, kann sehr klein sein. Es kann auch auf Stege zwischen den Flussleitabschnitten 24 verzichtet werden, wie es in FIG 4 gezeigt ist. Es ist sogar in einer Ausführungsform der Erfindung ein Verzicht auf die äußeren Stege, d. h. den Außenring 28, zwischen den Flussleitabschnitten 24 möglich, wie dies in FIG 5 gezeigt ist, da der komplette Verbund durch den Stützkörper aus Stützelementen 34 und Scheiben 32 in sich fixiert ist. Die zum Anpassen des Außendurchmessers des Rotors 10 an einen Stator nötige spanende Bearbeitung am Außendurchmesser des Rotors 10 ist durch die erhöhte Stabilität des Blechpakets 14 einfacher und kann damit kostengünstiger durchgeführt werden. Da auf eine Bandage zum Stabilisieren des Blechpakets 14, die um das Blechpaket 14 gewickelt werden muss, verzichtet werden kann, ergibt sich ein optimierter Luftspalt bei dem Reluktanzmotor. Das Blechpaket 14 des Rotors 10 weist eine verbesserte Biegeeigenfrequenz am Läufer durch den Gesamtverbund auf, wodurch sich das Rotor-Blechpaket 14 auch dazu eignet, die Welle des Reluktanzmotors zu stabilisieren. Auch ergibt sich hierdurch eine Reduktion der Torsionsschwingungen bei einem Betrieb des Reluktanzmotors. Durch die Wahl der Anzahl der Scheiben 32 kann eine modulare Drehzahleignung eingestellt werden.

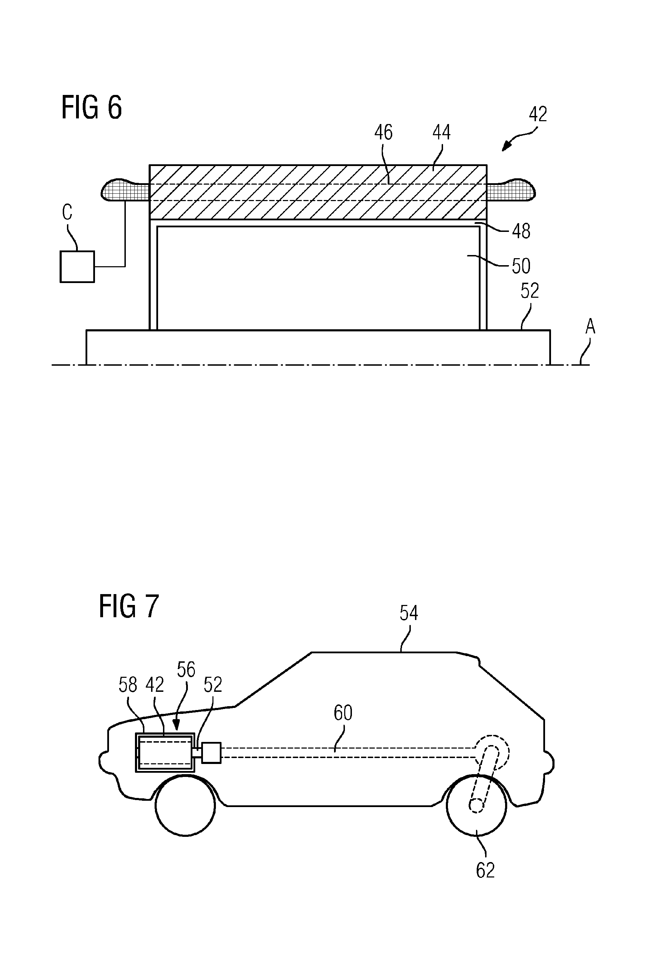

In FIG 6 ist eine elektrische Maschine 42 gezeigt, bei der es sich vorzugsweise um einen Reluktanzmotor handelt. Die elektrische Maschine 42 ist insbesondere als elektrischer Antriebsmotor für ein Kraftfahrzeug, insbesondere einen Kraftwagen, ausgestaltet. Die elektrische Maschine 42 umfasst einen Stator 44, in dem Wicklungen 46 elektrischer Spulen angeordnet sind, wobei in FIG 6 nur eine der Wicklungen 46 dargestellt ist. Die Wicklungen 46 werden durch einen Umrichter C abwechselnd bestromt, wodurch im Inneren des Stators 44 ein magnetisches Drehfeld in einem Luftspalt 48 der elektrischen Maschine 42 entsteht. Im Inneren des Stators 44 befindet sich ein Rotor 50, der drehfest mit einer Welle 50 verbunden ist. Die Welle 52 ist um eine Rotationsachse A drehbar in dem Stator 12 gelagert. Der Rotor 50 ist eine Ausführungsform des erfindungsgemäßen Rotors, beispielsweise der Rotor 10.

In FIG 7 ist in schematischer Darstellung ein Kraftfahrzeug 54 gezeigt, das beispielsweise ein Personenkraftwagen sein kann. Das Kraftfahrzeug 54 weist einen elektrischen Antriebsmotor 56 auf, in dessen Gehäuse 58 sich beispielsweise die elektrische Maschine 42 oder eine andere Ausführungsform der erfindungsgemäßen elektrischen Maschine befinden kann. Die Welle 52 der elektrischen Maschine 42 kann z.B. mit einem Antriebsstrang 60 des Kraftfahrzeugs 54 gekoppelt sein. Der Antriebsstrang 60 kann beispielsweise ein Hinterrad 62 des Kraftwagens 54 antreiben.

## Patentansprüche

1. Rotor (10) für einen Reluktanzmotor, wobei der Rotor (10) ein Blechpaket (14) aus mehreren elektrisch voneinander isolierten, sich radial (36) von einer Rotationsachse (A) des Rotors (10) weg erstreckenden Schichten (16) aufweist, wobei jede Schicht (16) zumindest ein magnetisch leitfähiges Rotorblech (18, 18') aufweist und in jeder Schicht (16) durch das zumindest eine Rotorblech (18, 18') insgesamt mehrere gebogene, streifenförmige und jeweils durch einen unmagnetischen Flusssperrbereich (22, 22') voneinander getrennte Flussleitabschnitte (24) gebildet sind, die sich jeweils in ihrer Längserstreckung quer zu einer q-Achse (30) des Rotors (10) erstrecken, wobei einander entsprechende unmagnetische Flusssperrbereiche unterschiedlicher Schichten (32) derart zueinander angeordnet sind, dass durch sie in dem Blechpaket zumindest ein sich entlang der Rotationsachse erstreckender, durch die Flussleitabschnitte der Schichten abgegrenzter Schacht in dem Blechpaket (14) gebildet ist,
**dadurch gekennzeichnet, dass** in dem zumindest einen Schacht (22, 22') jeweils ein unmagnetisches Stützelement (34) angeordnet ist, welches dazu ausgebildet ist, den jeweiligen radial innenliegenden und an den jeweiligen Schacht (22, 22') angrenzenden Flussleitabschnitt (24) gegen ein Verschieben in radialer Richtung (36) nach außen zu stützen.

2. Rotor (10) nach Anspruch 1, wobei das Blechpaket (14) eine zylindrische Grundform aufweist und an einer oder beiden Stirnseiten (20) der zylindrischen Grundform eine Scheibe (32) angeordnet ist, mit welcher jedes Stützelement (34) verbunden ist.

3. Rotor (10) nach einem der vorhergehenden Ansprüche, wobei zwischen zumindest zwei der Schichten (16) eine aus einem unmagnetischen Material gefertigte Scheibe (32) angeordnet ist, mit welcher jedes Stützelement (34) verbunden ist.

4. Rotor (10) nach Anspruch 2 oder 3, wobei die Scheibe (32) als ein mit einer Vergussmasse ausgegossener zylindrischer Teilbereich bereitgestellt ist.

5. Rotor (10) nach einem der vorhergehenden Ansprüche, wobei jedes Stützelement (34) eine Vergussmasse umfasst, mit welcher der zumindest eine Schacht(22) ausgegossen ist.

6. Rotor (10) nach Anspruch 5, wobei die Vergussmasse ein Polymer, insbesondere ein Kunstharz, und/oder eine amagnetische Metalllegierung umfasst.

7. Rotor (10) nach einem der Ansprüche 4 bis 6, wobei die Vergussmasse Fasern umfasst.

8. Rotor (10) nach einem der vorhergehenden Ansprüche, wobei innerhalb einer oder mehrerer oder aller Schichten (16) jeweils die Flussleitabschnitte (24) der Schicht a) nur an einem äußeren Umfang des Rotor (10) durch Blechstege (28) oder b) gar nicht durch Blechstege miteinander verbunden sind und hierdurch die unmagnetischen Flusssperrbereiche im inneren des Blechpakets (14) jeweils unterbrechungsfreie Flußsperren (24) bilden.

9. Rotor (10) nach einem der vorhergehenden Ansprüche, wobei ein Stützelement (34) oder mehrere oder alle Stützelemente (34) jeweils in der Ebene der Schichten (16) ein U-förmiges Profil aufweisen.

10. Rotor (10) nach einem der vorhergehenden Ansprüche, wobei bei einer oder mehreren oder allen der Schichten (16) jeweils mehrere, voneinander getrennte Rotorbleche (18') bereitgestellt sind, von denen jedes einen der Flussleitabschnitte (24) der Schicht (16) bildet.

11. Reluktanzmotor (42) mit einem Rotor (50) nach einem der vorhergehenden Ansprüche.

12. Kraftfahrzeug (54) mit einem Reluktanzmotor (42) nach Anspruch 11 als Antriebsmotor für eine Fahrt des Kraftfahrzeugs (54).

13. Verfahren zum Herstellen eines Rotors (10) gemäß einem der Ansprüche 1 bis 10, wobei zum Bilden jeder magnetischen Schicht (16) des Blechpakets (14) jeweils ein magnetisch leitfähiges Blech (18) bereitgestellt wird, welches die Flussleitabschnitte (24) der Schicht (16) aufweist und bei welchem als die unmagnetischen Flusssperrbereiche (22, 22') zwischen den Flussleitabschnitten (24) Aussparungen (22, 22') vorgesehen sind, und die Bleche (18) zu dem Blechpaket (18) aufgefädelt werden und nach dem Auffädeln das Blechpaket (14) mit einer unmagnetischen Vergussmasse vergossen wird, **dadurch gekennzeichnet, dass**
a) zwischen zumindest zwei der Bleche (18) und/oder
b) an einer oder beiden Stirnseiten des Blechpakets (14) beim Vergießen eine Scheibe (32) aus der Vergussmasse geformt wird, wobei jede Scheibe (32) mit in den Aussparungen (22) angeordneter Vergussmasse verbunden wird.

14. Verfahren nach Anspruch 13, wobei beim Auffädeln der Bleche (18) zwischen zumindest zwei der Bleche (18) jeweils ein Distanzstück (32) angeordnet wird und hierdurch ein Spalt zum Befüllen mit der Vergussmasse zwischen den Schichten (16) vorbereitet wird.

15. Verfahren nach Anspruch 13 oder 14, wobei nach dem Auffädeln und Vergießen der Bleche (18) ein Außenring (28) jedes magnetisch leitfähigen Blechs (18) durch ein spanendes Verfahren entfernt wird und hierdurch jedes der Bleche (18) in mehrere voneinander getrennte Rotorbleche (18') aufgetrennt wird, wobei jedes Rotorblech (18') einen Flussleitabschnitt (24) bildet.

## Geänderte Patentansprüche

### Geänderte Patentansprüche gemäss Regel 137(2) EPÜ.

**1.** Rotor (10) für einen Reluktanzmotor, wobei der Rotor (10) ein Blechpaket (14) aus mehreren elektrisch voneinander isolierten, sich radial (36) von einer Rotationsachse (A) des Rotors (10) weg erstreckenden Schichten (16) aufweist, wobei jede Schicht (16) zumindest ein magnetisch leitfähiges Rotorblech (18, 18') aufweist und in jeder Schicht (16) durch das zumindest eine Rotorblech (18, 18') insgesamt mehrere gebogene, streifenförmige und jeweils durch einen unmagnetischen Flusssperrbereich (22, 22') voneinander getrennte Flussleitabschnitte (24) gebildet sind, die sich jeweils in ihrer Längserstreckung quer zu einer q-Achse (30) des Rotors (10) erstrecken, wobei einander entsprechende unmagnetische Flusssperrbereiche unterschiedlicher Schichten (32) derart zueinander angeordnet sind, dass durch sie in dem Blechpaket zumindest ein sich entlang der Rotationsachse erstreckender, durch die Flussleitabschnitte der Schichten abgegrenzter Schacht in dem Blechpaket (14) gebildet ist, wobei in dem zumindest einen Schacht (22, 22') jeweils ein unmagnetisches Stützelement (34) angeordnet ist, welches dazu ausgebildet ist, den jeweiligen radial innenliegenden und an den jeweiligen Schacht (22, 22') angrenzenden Flussleitabschnitt (24) gegen ein Verschieben in radialer Richtung (36) nach außen zu stützen,
**dadurch gekennzeichnet, dass** zwischen zumindest zwei der Schichten (16) eine aus einem unmagnetischen Material gefertigte Scheibe (32) angeordnet ist, mit welcher jedes Stützelement (34) verbunden ist, wobei die Scheibe (32) als ein mit einer Vergussmasse ausgegossener zylindrischer Teilbereich bereitgestellt ist.

**2.** Rotor (10) nach Anspruch 1, wobei das Blechpaket (14) eine zylindrische Grundform aufweist und an einer oder beiden Stirnseiten (20) der zylindrischen Grundform eine Scheibe (32) angeordnet ist, mit welcher jedes Stützelement (34) verbunden ist.

**3.** Rotor (10) nach einem der vorhergehenden Ansprüche, wobei jedes Stützelement (34) eine Vergussmasse umfasst, mit welcher der zumindest eine Schacht(22) ausgegossen ist.

**4.** Rotor (10) nach Anspruch 3, wobei die Vergussmasse ein Polymer, insbesondere ein Kunstharz, und/oder eine amagnetische Metalllegierung umfasst.

**5.** Rotor (10) nach einem der vorhergehenden Ansprüche, wobei die Vergussmasse Fasern umfasst.

**6.** Rotor (10) nach einem der vorhergehenden Ansprüche, wobei innerhalb einer oder mehrerer oder aller Schichten (16) jeweils die Flussleitabschnitte (24) der Schicht a) nur an einem äußeren Umfang des Rotor (10) durch Blechstege (28) oder b) gar nicht durch Blechstege miteinander verbunden sind und hierdurch die unmagnetischen Flusssperrbereiche im inneren des Blechpakets (14) jeweils unterbrechungsfreie Flusssperren (24) bilden.

**7.** Rotor (10) nach einem der vorhergehenden Ansprüche, wobei ein Stützelement (34) oder mehrere oder alle Stützelemente (34) jeweils in der Ebene der Schichten (16) ein U-förmiges Profil aufweisen.

**8.** Rotor (10) nach einem der vorhergehenden Ansprüche, wobei bei einer oder mehreren oder allen der Schichten (16) jeweils mehrere, voneinander getrennte Rotorbleche (18') bereitgestellt sind, von denen jedes einen der Flussleitabschnitte (24) der Schicht (16) bildet.

**9.** Reluktanzmotor (42) mit einem Rotor (50) nach einem der vorhergehenden Ansprüche.

**10.** Kraftfahrzeug (54) mit einem Reluktanzmotor (42) nach Anspruch 9 als Antriebsmotor für eine Fahrt des Kraftfahrzeugs (54).

**11.** Verfahren zum Herstellen eines Rotors (10) gemäß einem der Ansprüche 1 bis 8, wobei zum Bilden jeder magnetischen Schicht (16) des Blechpakets (14) jeweils ein magnetisch leitfähiges Blech (18) bereitgestellt wird, welches die Flussleitabschnitte (24) der Schicht (16) aufweist und bei welchem als die unmagnetischen Flusssperrbereiche (22, 22') zwischen den Flussleitabschnitten (24) Aussparungen (22, 22') vorgesehen sind, und die Bleche (18) zu dem Blechpaket (18) aufgefädelt werden und nach dem Auffädeln das Blechpaket (14) mit einer unmagnetischen Vergussmasse vergossen wird, **dadurch gekennzeichnet, dass** zwischen zumindest zwei der Bleche (18) beim Vergießen eine Scheibe (32) aus der Vergussmasse geformt wird, wobei jede Scheibe (32) mit in den Aussparungen (22) angeordneter Vergussmasse verbunden wird.

**12.** Verfahren nach Anspruch 11, wobei beim Auffädeln der Bleche (18) zwischen zumindest zwei der Bleche (18) jeweils ein Distanzstück (32) angeordnet wird und hierdurch ein Spalt zum Befüllen mit der Vergussmasse zwischen den Schichten (16) vorbereitet wird.

**13.** Verfahren nach Anspruch 11 oder 12, wobei an einer oder beiden Stirnseiten des Blechpakets (14) beim Vergießen eine Scheibe (32) aus der Vergussmasse geformt wird, wobei jede Scheibe (32) mit in den Aussparungen (22) angeordneter Vergussmasse verbunden wird.

**14.** Verfahren nach einem der Ansprüche 11 bis 13, wobei nach dem Auffädeln und Vergießen der Bleche (18) ein Außenring (28) jedes magnetisch leitfähigen Blechs (18) durch ein spanendes Verfahren entfernt wird und hierdurch jedes der Bleche (18) in mehrere voneinander getrennte Rotorbleche (18') aufgetrennt wird, wobei jedes Rotorblech (18') einen Flussleitabschnitt (24) bildet.
